# FASCICULE DE BREVET EUROPEEN

(11) **EP 0 467 983 B1**
(45) Date de publication et mention de la délivrance du brevet: **05.10.1994**
(21) Numéro de dépôt: 90907144.1
(22) Date de dépôt: 10.04.1990
(51) Int. Cl.: E05B 67/00, E05B 45/00, F16G 13/00

(54) **DISPOSITIF ANTIVOL**
DIEBSTAHLSICHERUNG
ANTI-THEFT DEVICE

(30) Priorité: 11.04.1989 FR 8904757
(43) Date de publication de la demande: 29.01.1992
(73) Titulaire: LAUMONIER, Alain, F-95690 Nesles-la-Vallée (FR); LAUMONIER, Yves, F-95690 Nesles-la-Vallée (FR); LAUMONIER, Bruno, F-95690 Nesles-la-Vallée (FR)
(72) Inventeur: BIANCHI, Victor, F-06400 CANNES (FR)
(74) Mandataire: Keib, Gérard
(86) Numéro de dépôt international: FR9000256
(87) Numéro de publication internationale: WO9012182

(56) Documents cités:
- NL-A- 8 101 261
- US-A- 1 800 943
- US-A- 3 765 196
- US-A- 3 866 205

## Description

La présente invention concerne un dispositif antivol, et en particulier un dispositif antivol du type comportant un assemblage allongé relativement souple et déformable et qui est susceptible de former une boucle et qui présente à une de ses extrémités un organe de fermeture mâle et à son autre extrémité un organe de fermeture femelle adapté à recevoir et verrouiller l'organe de fermeture mâle, l'un de ces organes de fermeture comportant un dispositif de fermeture qui peut être ouvert au moyen d'une clé pour libérer l'autre organe de fermeture, l'assemblage allongé étant constitué d'éléments allongés emboîtés et assemblés l'un dans l'autre de façon indémontable à la manière d'une chaîne, une partie au moins de l'un étant susceptible de présenter un écart angulaire prédéterminé par rapport à la partie correspondante de l'autre pour former une boucle, chaque élément allongé comportant à une de ses extrémités une partie femelle, et à son extrémité opposée une partie mâle.

Un tel dispositif antivol, notamment destiné à protéger les véhicules à deux roues, ou autres équipements mobiles que l'on désire immobiliser, est connu d'après le US-A-3 765 196.

Ce dispositif comporte un câble sur lequel sont enfilées des douilles emboîtées l'une dans l'autre. Ces douilles sont réalisées en acier traité en surface et ont une dureté superficielle telle qu'elles ne peuvent pas être attaquées par les outils de coupe conventionnels. On sait toutefois que l'on peut ouvrir ces dispositifs au moyen d'une barre à mine: il suffit de placer ladite barre sensiblement dans l'axe de la boucle formée par le câble et de faire tourner la barre autour d'un axe perpendiculaire à celle-ci de manière à tordre le câble d'abord en forme de 8, puis en forme de torsade: on arrive ainsi, en serrant suffisamment la torsade, à développer dans le câble des contraintes de traction telles que les torons de celui-ci se désolidarisent des organes de verrouillage fixés aux extrémités du câble, celui-ci restant intact.

Le but de la présente invention est de remédier aux inconvénients des dispositifs antivol connus et de proposer un dispositif antivol du type précité qui résiste aux agressions par sectionnement, cisaillage, sciage, tronçonnage, qui soit d'utilisation simple et commode, relativement peu onéreux, et qui ne puisse pas être ouvert par torsion sur lui-même au moyen d'une barre à mine.

Suivant l'invention, le dispositif antivol est caractérisé en ce que, à l'état assemblé, la partie mâle présente successivement à partir de son extrémité, des moyens de retenue périphériques pour relier de manière indémontable l'élément allongé à un élément allongé adjacent, et des moyens formant gorge périphérique séparés des moyens de retenue et limités du côté opposé à ceux-ci par un épaulement, en ce que ladite partie mâle traverse à l'état assemblé une ouverture qui limite d'un côté une partie femelle avec laquelle coopère ladite partie mâle dont l'épaulement ne traverse pas l'ouverture et bute contre un bord de celle-ci, et en ce que les bords de l'ouverture et les moyens formant gorge périphérique sont conformés de façon belle que ladite partie mâle est adaptée à pivoter d'un angle prédéterminé par rapport à ladite partie femelle, et que, lorsque le dispositif est refermé sur lui-même pour former une boucle, des parties radialement opposées des parois de l'ouverture coopèrent avec les parties correspondantes des parois des moyens formant gorge périphérique et s'appuient directement sur ces parois pour résister aux efforts de séparation des éléments allongés l'un de l'autre.

Le dispositif de l'invention ne comporte ainsi aucun câble dont la fixation sur les organes de verrouillage situés à ses extrémités respectives constituerait un point faible du dispositif en cas de tentative d'effraction par torsion.

En outre, l'écart angulaire limité possible entre deux éléments allongés adjacents limite la déformabilité du dispositif antivol et interdit toute tentative de torsion de celui-ci.

Ainsi, en allant à l'encontre d'un préjugé ancien selon lequel un câble, par sa souplesse et ses caractéristiques exceptionnelles de résistance à la traction, était nécessaire dans un dispositif antivol du type précité, la présente invention permet de résoudre simplement le problème posé ci-dessus.

Par ailleurs, lorsque le dispositif antivol est à l'état assemblé fermé, la résistance aux efforts de torsion par l'appui des parois de l'ouverture sur les moyens formant gorge périphérique est indépendante des moyens d'assemblage des éléments allongés l'un dans l'autre, ces moyens d'assemblage constituant en général les points faibles des antivols connus. Il est ainsi possible d'obtenir de façon simple et fiable les niveaux élevés de résistance à la torsion exigés par les règlements en vigueur.

Selon une version intéressante de l'invention, l'assemblage allongé est logé à l'intérieur d'un tube flexible monté de façon étanche sur les extrémités dudit assemblage allongé et contenant un fluide sous pression, l'organe de fermeture comporte des moyens pour recevoir et contrôler la pression du fluide à l'intérieur du tube et détecter que cette pression a atteint une valeur minimale prédéterminée, et des moyens autonomes pour déclencher une alarme lorsque la pression a atteint cette valeur minimale prédéterminée, et le dispositif antivol comporte un bloc d'alarme séparé de l'organe de fermeture, lequel comporte des moyens pour envoyer un signal au bloc d'alarme quand la pression du fluide a atteint ladite valeur minimale prédéterminée, ce signal étant par exemple un signal radio.

Selon une version préférée de l'invention, le dispositif antivol comporte un élément formant capot d'accès aux moyens radio autonomes; cet élément est isolé électriquement d'une partie au moins du reste de l'organe de fermeture et est relié électriquement à une antenne intérieure desdits moyens radio pour servir d'antenne extérieure.

D'autres particularités et avantages de l'invention apparaîtront dans la description détaillée ci-après.

Aux dessins annexés donnés uniquement à titre d'exemples non limitatifs:
- la figure 1 est une vue partielle schématique, partiellement en coupe, d'un mode de réalisation de l'invention ;
- la figure 2 est une vue agrandie d'un détail de la figure 1 ;
- la figure 3 est une vue semblable à la figure 2, représentant des éléments allongés adjacents faisant un angle l'un par rapport à l'autre ;
- la figure 4 est une vue agrandie d'un autre détail de la figure 1 ;
- la figure 5 est une vue semblable à la figure 1 d'un autre mode de réalisation de l'invention ;
- la figure 6 est une vue semblable aux figures 2 et 3, représentant des éléments allongés selon un autre mode de réalisation de l'invention ;
- la figure 7 est une vue en coupe, selon VII-VII à la figure 8, de l'organe de fermeture selon un autre mode de réalisation de l'invention ;
- la figure 8 est une vue en coupe selon VIII-VIII à la figure 7 ;
- la figure 9 est une vue en coupe suivant IX-IX à la figure 7 ;
- la figure 10 est une vue en perspective du couvercle de l'organe de fermeture représenté aux figures 7, 8 et 9.

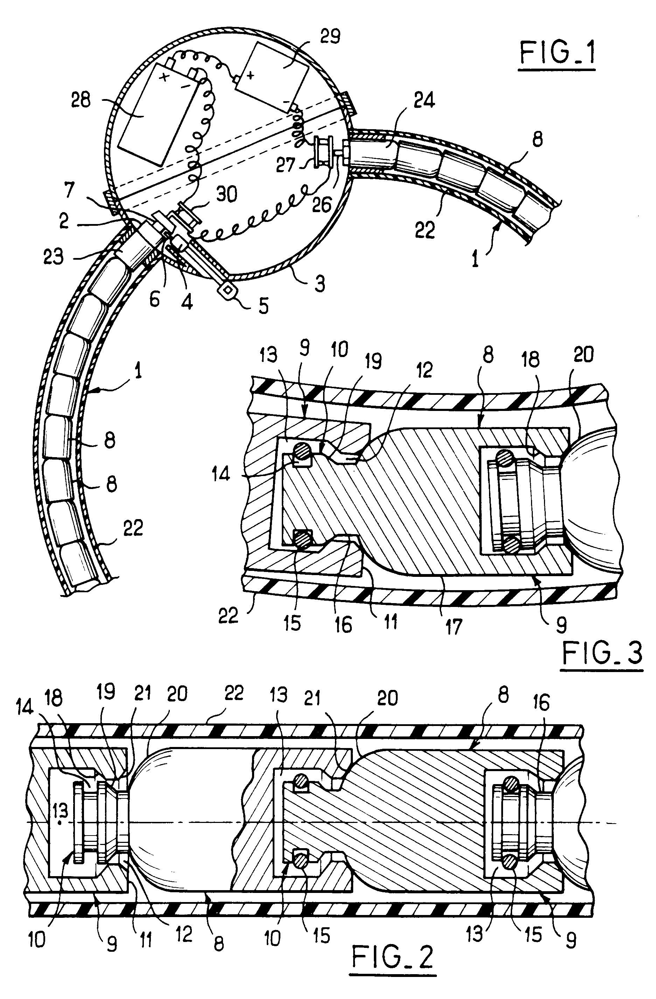

Dans la réalisation de la figure 1, le dispositif antivol comporte un assemblage allongé relativement souple et déformable 1, sensiblement en forme de chaîne, qui est susceptible de former une boucle. La chaîne 1 présente à une de ses extrémités un organe de fermeture mâle 2 et à son autre extrémité un organe de fermeture femelle 3 adapté à recevoir et verrouiller l'organe de fermeture mâle 2. L'organe femelle est un boîtier sphérique 3 composé de deux parties hémisphériques assemblées d'une manière quelconque ; le boîtier contient une serrure 4 qui peut être ouverte au moyen d'une clé 5. Dans l'exemple représenté, le pêne 6 de la serrure s'encastre dans une gorge 7 de l'élément mâle 2 pour verrouiller celui-ci et bloquer l'antivol en position fermée.

La chaîne 1 est constituée d'éléments allongés 8 formant maillons sensiblement cylindriques et d'une seule pièce, emboîtés et encliquetés l'un dans l'autre de manière indémontable, et articulés l'un par rapport à l'autre.

Les maillons 8 sont réalisés par exemple en acier de traitement thermique présentant après traitement une dureté superficielle telle qu'ils ne peuvent pas être attaqués à la pince, à la cisaille ou à la scie : ils sont par exemple en acier 16 NC 6 trempé et cémenté.

Comme représenté en détail aux figures 2 et 3, chaque maillon 8 comporte à une de ses extrémités une partie femelle 9 et à son extrémité opposée une tête mâle 10 destinée à s'emboîter et à s'encliqueter dans la partie femelle 9 d'un maillon 8 adajcent.

L'extrémité de la partie femelle 9 est fermée par une paroi 11 comportant une ouverture axiale circulaire 12 destinée à recevoir la tête mâle 10 d'un maillon 8 adjacent.

Derrière la paroi 11 s'étend une cavité cylindrique 13 dont le diamètre intérieur est plus grand que celui de l'ouverture 12.

La tête mâle 10 présente sur sa paroi périphérique, dont le diamètre extérieur est légèrement plus petit que le diamètre intérieur de l'ouverture 12, une gorge 14 qui reçoit un jonc 15. Le jonc 15 rentre complètement dans la gorge 14 pour permettre le passage de la tête 10 dans l'ouverture 12, puis se détend dans la cavité 13 et empêche tout retrait de la tête 10.

Une gorge 16, ménagée à la périphérie du maillon 8 entre le corps cylindrique 17 et la tête 10 de celui-ci, reçoit le bord intérieur de la paroi 11 et permet un écart angulaire entre deux maillons 8 adjacents.

Lorsque la chaîne 1 est dans sa position fermée, verrouillée, représentée à la figure 1, le bord radial intérieur 18 de la paroi 11 et le bord radial 19 côté extrémité mâle de la gorge périphérique 16 de la tête mâle 10, conformés en cônes d'angles appropriés, s'appuient l'un sur l'autre (voir figures 2 et 3).

La paroi périphérique 20 entre la gorge 16 et le corps cylindrique 17 du mailon 8 est de préférence de forme sphérique, et il en est de même de la surface du bord radial extérieur 21 de la paroi 11.

En cas de tentative d'effraction, les efforts sont ainsi supportés d'une part par les bords 18 et 19, d'autre part, par les surfaces 20 et 21, qui sont respectivement en contact l'un(e) avec l'autre, et non pas par le jonc 15.

Le jonc 15 a été représenté avec une section circulaire, mais peut avoir une section autre, notamment rectangulaire ou trapézoïdale.

Comme représenté aux figures 1, 2 et 3, la chaîne 1 est insérée à l'intérieur d'un tube souple 22, monté de manière étanche sur les maillons d'extrémité 23 et 24, et rempli d'un fluide sous pression, par exemple un liquide et éventuellement du gaz tel que de l'air pour créer la pression. La pression peut également être créée par l'élasticité du tube 22.

Ainsi, en cas de coupure du tube 22, qui est par exemple en matière plastique, lors d'une tentative d'effraction, le liquide se répand, et/ou le gaz s'échappe, et la pression à l'intérieur du tube 22 chute brutalement.

Le liquide peut être un colorant indélébile pour marquer l'agresseur, et/ou un lubrifiant facilitant les mouvements des maillons l'un par rapport à l'autre ; le gaz peut être également un gaz lacrymogène.

Le dispositif antivol comporte, comme représenté à la figure 1, les moyens nécessaires pour recevoir et contrôler la pression du fluide à l'intérieur du tube 22 et détecter que cette pression a atteint une valeur minimale prédéterminée, et des moyens pour déclencher une alarme lorsque la pression a atteint cette valeur minimale prédéterminée.

Il comporte ainsi un manostat 25 qui est incorporé dans le maillon d'extrémité 24 et qui commande une tige 26 actionnant un interrupteur 27 qui se ferme si la pression à l'intérieur du tube 22 chute en dessous d'un seuil prédéterminé. Le boîtier 3 comporte également une pile ou batterie 28 et un avertisseur sonore 29 tel qu'un klaxon alimenté par la pile 28 quand l'interrupteur 27 est fermé. Le circuit électrique peut également comporter un interrupteur 30 fermé par l'extrémité mâle 2 de la chaîne 1 lorsque le dispositif antivol est fermé et verrouillé.

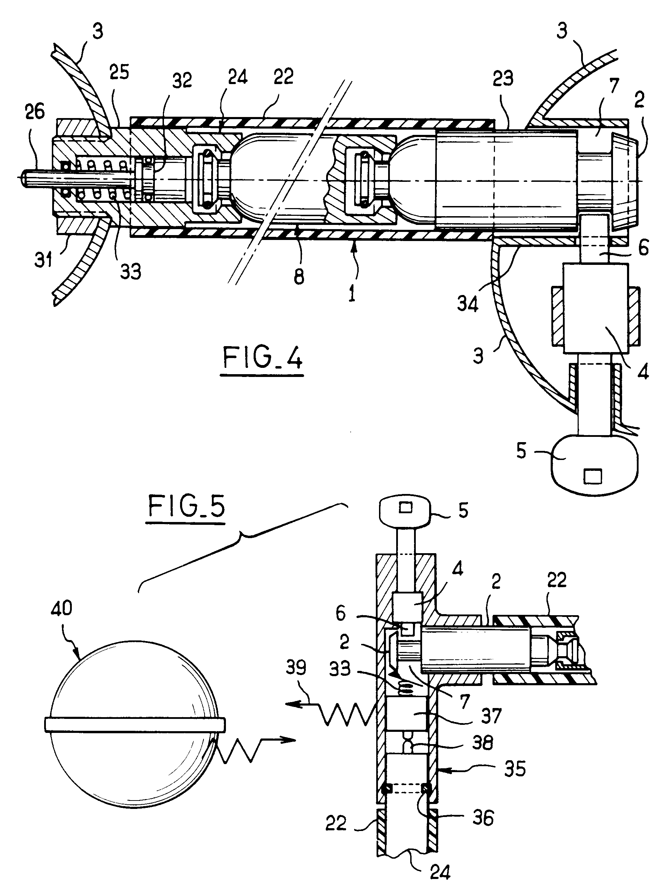

Comme représenté à la figure 4, le maillon d'extrémité 24 est fixé à demeure sur le boîtier 1, par exemple par un écrou 31 qui est ensuite bloqué. L'intérieur du maillon 24 est creux et constitue un cylindre à l'intérieur duquel est logé un piston 32 qui est sollicité côté boîtier 3 par un ressort 33 et côté chaîne 1 par la pression du fluide contenu à l'intérieur du tube souple 22 fixé de manière étanche sur le maillon 24.

Si la pression dans le tube 22 tombe à une valeur inférieure à la force du ressort 33, ce dernier repousse vers l'extérieur du boîtier 3 le piston 32 qui entraîne la tige 26 pour fermer l'interrupteur 27 et actionner l'avertisseur sonore 29.

Comme le montre également la figure 4, le maillon d'extrémité 23 côté embout mâle libre 2 de la chaîne 1 pénètre dans une tubulure 34 du boîtier 3 et est bloqué par le pêne 6 de la serrure 4 qui s'insère dans la gorge 7.

Dans la réalisation de la figure 5, les éléments semblables à ceux de la figure 4 et exerçant la même fonction portent les mêmes numéros de repère que ceux-ci. L'organe de fermeture 35, dans lequel est encliqueté en 36 le maillon d'extrémité 24, comporte un piston mobile 37 qui reçoit d'un côté la pression du fluide et de l'autre la force du ressort 33. Quand le piston 37 vient en contact avec l'électrode 38 du maillon 24, un circuit électrique est fermé. Le piston 37 et l'organe de fermeture 35 comportent des moyens connus en eux-mêmes pour transmettre un signal radio d'alarme, symbolisé en 39, indiquant une tentative d'effraction.

Ce signal radio 39 est reçu par un boîtier récepteur 40 séparé de l'organe de fermeture 35 et comportant des circuits connus en eux-mêmes destinés à recevoir le signal radio 39 et à actionner un klaxon (non représenté). Le boîtier 40 peut ainsi être dissimulé sur le véhicule ou l'équipement que l'on désire protéger, et n'être que difficilement accessible pour ne pas risquer d'être neutralisé.

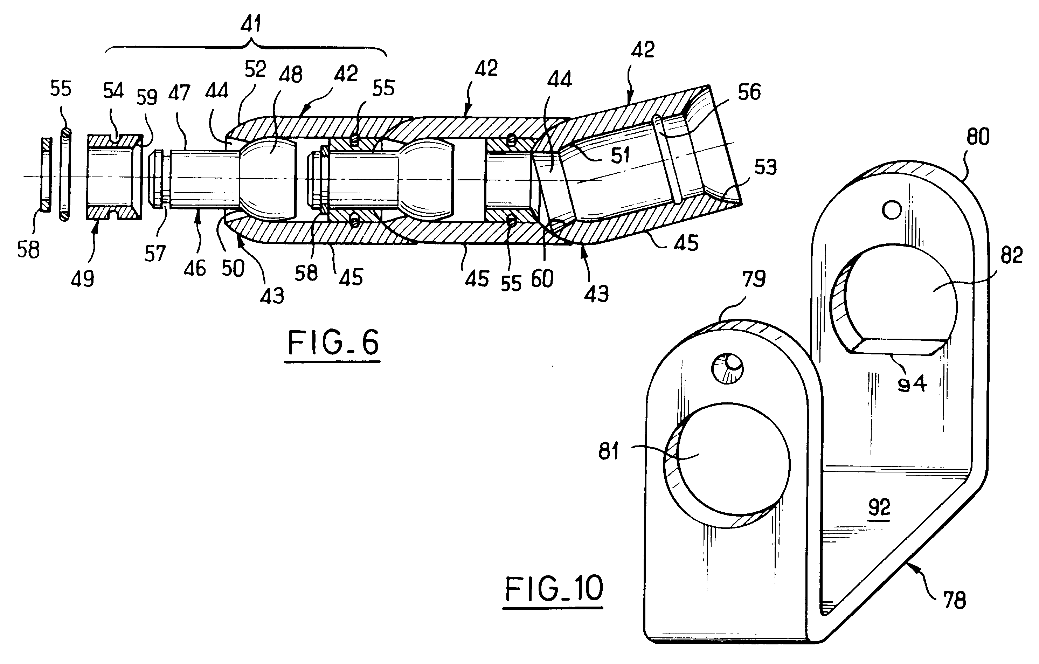

Dans la réalisation de la figure 6, chaque maillon 41 comporte deux parties distinctes articulées l'une par rapport à l'autre : d'une part une enveloppe 42 sensiblement tubulaire comporte à une de ses extrémités une partie effilée 43 qui présente une ouverture axiale 44 de diamètre intérieur inférieur au diamètre intérieur de la partie tubulaire 45 ; d'autre part, une broche 46 comporte un corps cylindrique 47 destiné à passer dans l'ouverture axiale 44, et une tête 48 destinée à pénétrer dans la partie tubulaire 45 et à être retenue par la partie effilée 43 de l'enveloppe 42.

Chaque maillon 41 comporte en outre une douille tubulaire 49 destinée à être enfilée sur le corps cylindrique 47 de la broche 46 et à être introduite à l'intérieur de la partie tubulaire 45 de l'enveloppe 42 d'un maillon 41 adjacent, ainsi que des moyens d'encliquetage pour solidariser la douille 49 et la broche 46 d'une part, la douille 49 et l'enveloppe 42 d'un maillon 41 adjacent d'autre part.

La tête 48 de la broche 46 a une surface extérieure 50 sphérique, et la paroi intérieure 51 de la partie effilée 43 de l'enveloppe 42 a une surface intérieure sphérique conjuguée de ladite surface extérieure 50.

La partie effilée 43 de l'enveloppe 42 a une surface extérieure 52 sphérique concentrique à sa surface intérieure 51, et la paroi de l'enveloppe 42 présente à l'extrémité non effilée de celle-ci une surface intérieure 53 sphérique conjuguée de la surface extérieure sphérique 52 de l'enveloppe 42.

Comme on peut le voir à la figure 6, lorsque deux maillons 41 adjacents sont encliquetés l'un dans l'autre, la surface extérieure sphérique 50 de la tête 48 de la broche 46 du premier maillon est sensiblement en contact avec la surface intérieure sphérique 51 de la partie effilée 43 de l'enveloppe 42 de celui-ci et la surface extérieure sphérique 52 de l'enveloppe 42 du premier maillon est sensiblement en contact avec la surface intérieure sphérique 53 de la paroi de l'enveloppe 42 du second maillon.

Cette disposition est fixée par les moyens d'encliquetage représentés : la douille 49 présente dans sa partie périphérique une gorge 54 dans laquelle peut disparaître un jonc 55 quand on insère la douille 49 à l'intérieur de l'enveloppe 42 d'un maillon 41 adjacent. Le jonc 55 se détend quand la gorge 54 arrive au niveau d'une gorge conjuguée 56 ménagée dans la paroi périphérique intérieure de ladite enveloppe : la douille 49 est alors encliquetée en position fixe à l'intérieur de l'enveloppe 42.

Par ailleurs, le corps cylindrique 47 de la broche 46 présente près de son extrémité opposée à la tête 48 une gorge 57 dans laquelle peut disparaître complètement un jonc 58 pour permettre le passage du corps 47 à l'intérieur de la douille 49.

Lorsque deux maillons sont emboîtés l'un dans l'autre comme représenté à la figure 6, la gorge 57 arrive au niveau de l'extrémité de la douille 49, de sorte que le jonc 58 se détend et bloque la broche 46 par rapport à la douille 49. Cet assemblage est indémontable et inviolable : la partie du corps cylindrique 47 apparente entre la tête 48 et l'extrémité côté tête 48 de la douille 49 constitue une gorge qui reçoit le bord de l'ouverture 44 lorsque deux maillons adjacents font un angle l'un par rapport à l'autre.

Les maillons adjacents 41 sont donc imbriqués l'un dans l'autre pratiquement sans jeu. Grâce aux portées sphériques précitées, l'enveloppe 42 d'un maillon 41 se trouve articulée par rotule à la fois par rapport à la tête de la broche 46 qui lui est associée et par rapport à l'enveloppe 42 du maillon adjacent. Pour permettre le fonctionnement de ces articulations par rotule, la paroi de la douille 49 à l'extrémité de celle-ci située du côté de la tête 48 de la broche 46 associée est échancrée en 59 de façon à prolonger la surface sphérique intérieure 53. De même, la paroi périphérique 60 de l'ouverture axiale 44 de la partie effilée 43 est en forme de tronc de cône évasé vers l'extérieur pour permettre un écart angulaire entre l'enveloppe 42 d'un maillon 41 et la broche 46 de celui-ci retenue dans l'enveloppe d'un maillon adjacent.

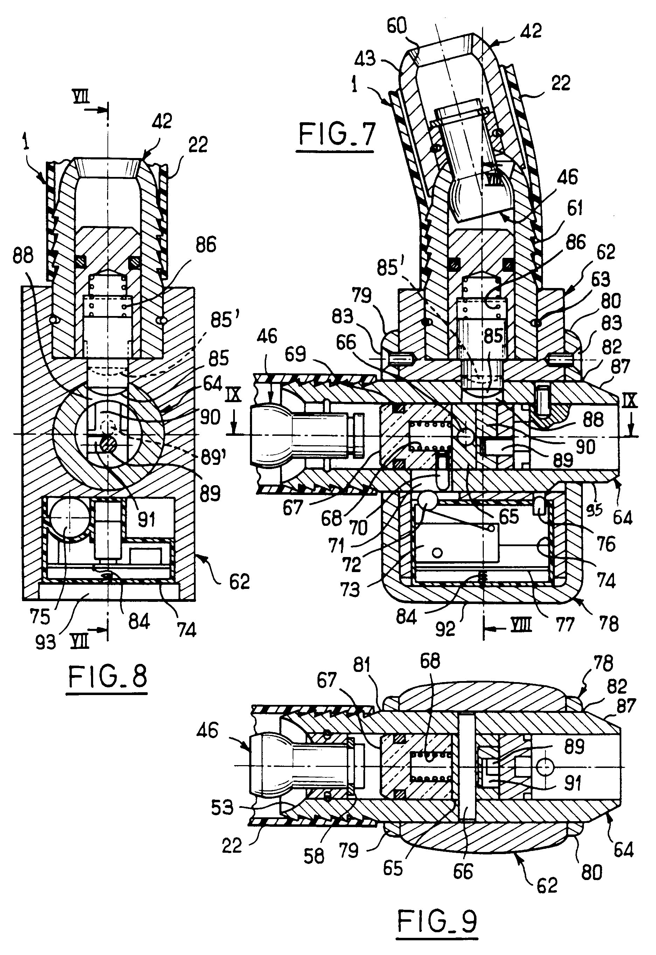

Dans la réalisation représentée aux figures 7 à 9, la chaîne (non représentée) formée par les maillons 41 est insérée dans un tube souple 22 ; le tube souple 22 est fixé de manière étanche à la périphérie du maillon d'extrémité 61 qui est encliqueté à demeure dans un organe de fermeture femelle 62 par un jonc 63 ; le tube 22 est également fixé de manière étanche à la périphérie de l'embout 64 qui constitue l'extrémité libre de la chaîne. Comme dans le mode de réalisation des figures 1 à 5, le tube 22 est rempli d'un fluide sous pression, et le dispositif antivol comporte des moyens pour recevoir et contrôler la pression du fluide à l'intérieur du tube et détecter que cette pression a atteint une valeur minimale prédéterminée, et des moyens pour déclencher une alarme lorsque la pression a atteint cette valeur minimale prédéterminée.

L'embout d'extrémité 64 présente à cet effet une structure tubulaire, et comporte sensiblement en son milieu une paroi transversale 65 fixée à la paroi périphérique de l'embout 64 par une goupille 66.

Un piston 67 est poussé par la pression du fluide contre la paroi 65 contre l'action d'un ressort 68, et comporte à sa périphérie un joint d'étanchéité 69 pour contenir le fluide. Le piston 67 comporte également un doigt 70 qui se déplace dans un logement longitudinal 71 de la paroi de l'embout 64 si le piston 67 se déplace à l'intérieur de l'embout 64 sous l'action du ressort 68 lorsque la pression du fluide baisse à l'intérieur du tube 22, soit lors d'une tentative d'agression, soit par suite d'une fuite de fluide : lorsque la pression a atteint un seuil minimal prédéterminé, le doigt actionne le palpeur 72, qui déborde légèrement à l'intérieur du logement 71, d'un micro-contact 73.

Le micro-contact 73 est enfermé à l'intérieur d'un boîtier 74 en matériau isolant, indépendant, démontable et interchangeable. Ce boîtier comprend tous les éléments permettant, lors de l'actionnement du palpeur 72, d'émettre un signal radio d'alarme ; il comprend ainsi notamment, et de manière connue en soi, une pile 75, un circuit imprimé cablé avec ses composants (non représenté), une diode électroluminescente de contrôle 76, une antenne interne 77.

Pour être protégé mécaniquement, le boîtier 74 est recouvert par un capot amovible 78 qui vient s'adapter étroitement sur l'organe de fermeture 62. Le capot 78, représenté notamment à la figure 10, est en forme de U : ses branches 79 et 80 comportent chacune une ouverture, respectivement 81, 82, traversée par l'embout 64 lorsque le dispositif antivol est dans la position fermée verrouillée représentée aux figures 7 à 9 : le capot 78 est ainsi retenu sur l'organe de fermeture 62. Il est par ailleurs fixé à ce dernier par deux vis 83. Sa base 92 s'imbrique dans la cavité 93 ménagée entre les parois latérales de l'organe 62 pour protéger le boîtier 74 (voir figure 8).

Le capot 78 sert d'antenne radio extérieure. Il est à cet effet isolé de la masse générale de l'organe de fermeture 62 : cette isolation se fait simplement par une couche de peinture Epoxy, et le contact entre l'antenne intérieure 77 et cette antenne extérieure 78 est assuré par un clinquant élastique 84 monté en pression contre le capot 78 sur une petite surface restant conductrice.

Même en cas de court-circuit volontaire de ce capot 78 avec la masse générale, l'émission radio n'est pas perturbée. C'est pour cela que les vis 83, qui maintiennent le capot 78 lorsque l'antivol est ouvert, ne gènent pas.

Par ailleurs, l'organe de fermeture 62 comporte un piston de fermeture 85 dont l'extrémité arrondie est poussée par un ressort 86 vers l'intérieur de l'ouverture de l'organe 62 qui reçoit l'embout 64. Le piston de fermeture 85 est représenté aux figures 7 et 8 en traits pleins dans sa position de fermeture et en tirets dans sa position ouverte 85'.

L'embout 64 présente à son extrémité libre une surface effilée en cône 87 qui a pour but de soulever le piston de fermeture 85 quand on ferme le dispositif antivol : on peut donc fermer ce dernier sans clé ; lorsque l'embout 64 est en place, le piston de fermeture 85 tombe dans une ouverture radiale 88 de l'embout 64 et verrouille ce dernier (position en traits pleins). La partie conique 87 de l'embout 64 dépasse de la paroi extérieure de la branche 80 du capot 78 pour verrouiller ce dernier quand le dispositif antivol est fermé.

On constate à la figure 10 que l'ouverture 82 de la branche 80 du capot 78 présente du côté de la base 92 du capot un méplat 94. Ce méplat 94 correspond à un méplat conjugué 95 de l'extrémité de l'embout 64 et sert au centrage de cet embout : l'embout étant ainsi centré, l'alésage radial 88 se présente automatiquement devant le piston de fermeture 85, le logement 71 se présente automatiquement devant le palpeur 72.

L'embout 64 présente également à son extrémité un canon de serrure (non représenté) manoeuvrable avec une clé. De façon connue en soi, le canon, lorsque la clé fait un demi-tour sur elle-même, actionne un doigt 89 qui tourne de 180° autour de l'axe de l'embout 64 : dans ce mouvement, le doigt 89 soulève radialement, en direction du piston 85, un poussoir 90 qui comporte une rainure 91 dans laquelle coulisse le doigt 89. Quand le doigt 89 a tourné de 180° et est dans la position 89' représentée en tirets à la figure 8, le poussoir 90 repousse le piston de fermeture 85 dans sa position 85' représentée en tirets, ce qui permet de retirer l'embout 64 de l'organe 62.

Les maillons 41, l'organe de fermeture 62, le capot 78, sont réalisés de préférence en un acier de traitement thermique, par exemple en acier 16 NC 6, trempé et cémenté.

Les enveloppes des maillons 41 ont par exemple une épaisseur de 4 mm environ, un diamètre extérieur de 24 mm environ, une longueur de 35 mm environ, ce qui correspond après emboîtement à un pas de 30 mm environ entre deux enveloppes adjacentes. L'écart angulaire maximal entre deux enveloppes adjacentes est de 12 à 15° par exemple.

On obtient ainsi avec 35 maillons 41 un dispositif antivol de longueur 120 cm environ qui a en position fermée un diamètre d'environ 40 cm, et qui résiste aux agressions habituelles par cisaillage, sciage, ou par torsion, et qui déclenche une alarme dès que le tube 22 a été percé. Il est évidemment extrèmement facile de rajouter à la demande un nombre quelconque de maillons lors de l'assemblage du dispositif antivol.

A cet effet, l'organe de fermeture 62 est associé à un bloc d'alarme, tel que la bloc 40 à la figure 5, d'un type connu quelconque, dissimulé dans un endroit difficilement accessible du véhicule ou de l'équipement à protéger, ce bloc d'alarme étant adapté à recevoir le signal radio émis par le capot 78 et à alimenter tous dispositifs d'alarme sonore et visuelle tels que klaxon, feux clignotants, etc... Un tel bloc est connu en soi et n'a pas besoin d'être décrit en détail ici.

On va maintenant résumer ci-dessous le mode de fonctionnement et d'utilisation du dispositif représenté aux figures 6 à 10, cette description étant dans sa majeure partie applicable au mode de réalisation représenté aux figures 1 à 5.

La diode 76 s'allume quand l'utilisateur engage l'embout 64 dans l'ouverture de l'organe de fermeture 62. A ce moment là, le micro-contact 73 est actionné par son palpeur 72 repoussé par l'embout 64, et excite l'émetteur radio. La diode 76 s'allume, ce qui permet de vérifier le système électronique, le contact du micro-contact 73, l'état de la pile 75, celui de la diode 76, le bon fonctionnement de l'émision radio vers le récepteur 40. Ensuite, lorsque l'embout 64 est en place en position fermée, le piston de fermeture 85 qui a été soulevé par le cône d'entrée 87 de l'embout 64 tombe dans l'alésage 88 et verrouille l'ensemble. Il n'y a pas besoin de clé pour fermer l'antivol.

De même, en position fermée, le palpeur 72 du microcontact 73 tombe dans le logement 71 et coupe par l'intermédiaire du contact 73 l'électronique de l'émetteur radio qui à partir de ce moment ne consomme plus d'énergie.

La pression de l'huile dans le tube 22 maintient le piston 67 en butée mécanique contre la paroi 65 tout en comprimant son ressort de rappel 68.

Dans le cas où la pression chute, le piston 67 est repoussé par le ressort 68, le doigt 70 lié au piston 67 se déplace et vient actionner le palpeur 72 qui déclenche l'émission radio.

Ce doigt 70 a deux fonctions :
1) Actionner le micro-contact 73 en cas de fuite d'huile ;
2) Servir également d'indicateur visuel de la position du piston 67 donc de contrôle de la pression de l'huile dans le tube 22. Il permet de détecter les microfuites qui peuvent se produire à la longue.

L'émission radio est de préférence à la fréquence de 303,875 MHz, homologuée dans de nombreux pays, mais peut également être à d'autres fréquences homologuées, telles que 224 MHz environ.

L'émission est évidemment codée pour éviter les interférences intempestives, notamment la mise en circuit volontaire du système par un émetteur de même fréquence. Le récepteur radio du bloc d'alarme 40 est également codé et réglé sur la fréquence de l'émetteur.

Bien entendu, l'invention n'est pas limitée aux modes de réalisation que l'on vient de décrire.

On peut ainsi modifier les maillons ou les éléments constitutifs de ceux-ci, et les remplacer par des éléments équivalents : on peut par exemple remplacer les joncs à section circulaire par des joncs à section rectangulaire ou autre, et réciproquement. On peut également remplacer les joncs par des systèmes de billes ou de doigts poussés par des ressorts et remplissant les mêmes fonctions, ou d'autres dispositifs d'encliquetage.

Les moyens d'encliquetage décrits peuvent être remplacés par d'autres moyens équivalents, comme par exemple un sertissage, par refoulement vers l'intérieur du métal de l'enveloppe qui pénètre dans la douille et du métal de la douille qui pénètre par exemple dans une gorge périphérique de la broche.

On peut remplacer les systèmes de verrouillage décrits par d'autres équivalents assurant les mêmes fonctions et produisant les mêmes résultats. On peut également modifier la répartition des éléments constitutifs entre l'embout libre, d'une part, l'organe de fermeture d'autre part. On peut aussi utiliser le dispositif antivol décrit sans les dispositifs d'alarme décrits, qu'ils soient d'une seule pièce avec le dispositif antivol ou séparés de celui-ci.

De même, le dispositif antivol décrit est prévu équipé d'une serrure standardisée du type "alarme" imperçable et inviolable. Il peut bien entendu être équipé d'une serrure d'un type quelconque, et être en particulier adapté à une serrure dite électronique d'un type quelconque : il suffirait d'introduire dans une fente de l'organe de fermeture une carte à puce codée lue par un lecteur contenu dans cet organe. Le poussoir pourrait alors être entraîné par un micromoteur électrique ; la pile alimentant ce moteur pourrait par exemple être logée soit dans l'organe de fermeture, soit dans une poignée solidaire de la carte à puce.

On peut également utiliser le dispositif antivol conforme à l'invention sans tube 22, sans manostat et sans alarme, le dispositif étant limité à l'assemblage des maillons équipé respectivement à ses extrémités d'un organe de fermeture femelle et d'un embout mâle.

Enfin, on peut envisager des maillons ne présentant pas la symétrie de révolution décrite et représentée.

## Revendications

1. Dispositif antivol du type comportant un assemblage allongé (1) relativement souple et déformable qui est susceptible de former une boucle et qui présente à une de ses extrémités un organe de fermeture mâle (2, 64) et à son autre extrémité un organe de fermeture femelle (3, 62) adapté à recevoir et verrouiller l'organe de fermeture mâle (2, 64), l'un de ces organes de fermeture (3, 62 ; 2, 64) comportant un dispositif de fermeture qui peut être ouvert au moyen d'une clé pour libérer l'autre organe de fermeture, l'assemblage allongé (1) étant constitué d'éléments allongés (8, 41) emboîtés et assemblés l'un dans l'autre de façon indémontable à la manière d'une chaîne, une partie au moins de l'un étant susceptible de présenter un écart angulaire prédéterminé par rapport à la partie correspondante de l'autre pour former une boucle, chaque élément allongé (8, 41) comportant à une de ses extrémités une partie femelle (9, 42) et à son extrémité opposée une partie mâle (10 ; 46, 49), caractérisé en ce que, à l'état assemblé, la partie mâle (10 ; 46, 49) présente successivement, à partir de son extrémité, des moyens de retenue (14, 15 ; 54, 55) périphériques pour relier de manière indémontable l'élément allongé (8, 41) à un élément allongé (8, 41) adjacent, et des moyens formant gorge périphérique (16 ; 49, 47, 50) séparés des moyens de retenue (14, 15 ; 54, 55), et limités du côté opposé à ceux-ci par un épaulemnt (20, 50), en ce que ladite partie mâle (10 ; 46, 49) traverse à l'état assemblé une ouverture (12, 44) qui limite d'un côté une partie femelle (9, 42) avec laquelle coopère ladite partie mâle (10 ; 46, 49) dont l'épaulement (20, 50) ne traverse pas l'ouverture (12, 44) et bute contre un bord (21, 51) de celle-ci, et en ce que les bords de l'ouverture (12, 44) et les moyens formant gorge périphérique (16 ; 49, 47, 50) sont conformés de façon telle que ladite partie mâle (10 ; 46, 49) est adaptée à pivoter d'un angle prédéterminé par rapport à ladite partie femelle (9, 42), et que, lorsque le dispositif est refermé sur lui-même pour former une boucle, des parties radialement opposées des parois (18, 21 ; 60, 51) de l'ouverture (12, 44) coopèrent avec les parties correspondantes des parois (19, 20 ; 47, 50) des moyens formant gorge périphérique (16 ; 49, 47, 50) et s'appuient directement sur ces parois (19, 20 ; 47, 50) pour résister aux efforts de séparation des éléments allongés (8, 41) l'un de l'autre.

2. Dispositif antivol conforme à la revendication 1, caractérisé en ce que les éléments allongés (8, 41) présentent une symétrie de révolution par rapport à leur axe longitudinal.

3. Dispositif antivol conforme à l'une des revendications 1 ou 2, caractérisé en ce que chaque élément allongé (8) est un élément d'une seule pièce, en ce que l'extrémité de la partie femelle (9) est fermée par une paroi (11) comportant une ouverture axiale sensiblement circulaire (12) destinée à recevoir la partie mâle (10) d'un élément allongé (8) adjacent, et en ce que derrière ladite paroi (11) s'étend une cavité (13) sensiblement circulaire dont le diamètre est plus grand que celui de l'ouverture (12), dans laquelle peuvent se détendre des moyens d'encliquetage élastiques ou montés élastiquement (15) de la partie mâle (10) susceptibles de rentrer complètement dans une gorge périphérique (14) de la paroi périphérique extérieure de celle-ci pour passer dans l'ouverture (12), et d'interdire, une fois détendus, le retrait de ladite partie mâle (10).

4. Dispositif antivol conforme à la revendication 3, caractérisé en ce que la partie mâle (10) comporte en arrière de la gorge (14) une seconde gorge périphérique (16) destinée à recevoir le bord intérieur de l'ouverture (12), et en ce que le bord radial intérieur (18) de la paroi (11) et le bord radial (19) côté extrémité mâle de la gorge périphérique (16) de la partie mâle (10) sont conformés de manière à s'appuyer l'un sur l'autre quand l'assemblage allongé (1) est refermé sur lui-même en forme de boucle.

5. Dispositif antivol conforme à l'une des revendications 1 ou 2, caractérisé en ce que chaque élément allongé (41) comporte deux parties distinctes articulées l'une par rapport à l'autre, d'une part une enveloppe (42) sensiblement tubulaire comportant à une de ses extrémités une partie effilée (43) présentant une ouverture axiale (44) de diamètre intérieur inférieur au diamètre intérieur de la partie tubulaire (45), d'autre part un élément formant broche (46) comportant un corps cylindrique (47) destiné à passer dans ladite ouverture axiale (44), et une tête (48) destinée à pénétrer dans la partie tubulaire (45) et à être retenue par la partie effilée (43) de l'enveloppe (42).

6. Dispositif antivol conforme à la revendication 5, caractérisé en ce que l'élément allongé (41) comporte en outre une douille (49) destinée à être enfilée sur le corps cylindrique (47) de la broche (46) et à être introduite à l'intérieur de la partie tubulaire (45) de l'enveloppe (42) d'un élément allongé (41) adjacent, ainsi que des moyens d'assemblage entre la douille (49) et la broche (46) d'une part, la douille (49) et l'enveloppe (42) de l'élément allongé (41) adjacent d'autre part.

7. Dispositif antivol conforme à la revendication 6, caractérisé en ce que la tête (48) de la broche (46) a une surface extérieure sphérique (50), et constitue une articulation à rotule avec la paroi intérieure (51) de la partie effilée (43) de l'enveloppe (42).

8. Dispositif antivol conforme à la revendication 7, caractérisé en ce que la partie effilée (43) de l'enveloppe (42) d'un élément (41) a une surface extérieure sphérique (52) et constitue une articulation à rotule avec le bord qui lui fait face (53) de la paroi de l'enveloppe (42) de l'élément (41) adjacent.

9. Dispositif antivol conforme à la revendication 8, caractérisé en ce que, lorsque deux éléments allongés (41) adjacents sont assemblés l'un dans l'autre, la surface extérieure sphérique (50) de la tête (48) de la broche (46) du premier élément (41) est sensiblement en contact avec la surface intérieure (51) de la partie effilée (43) de l'enveloppe (42) de celui-ci, et la surface extérieure sphérique (52) de l'enveloppe (42) du premier élément (41) est sensiblement en contact avec le bord qui lui fait face (53) de la paroi de l'enveloppe (42) du second élément (41), les deux surfaces sphériques (50) et (52) étant concentriques.

10. Dispositif antivol conforme à l'une quelconque des revendications 1 à 9, caractérisé en ce que l'assemblage allongé (1) est logé à l'intérieur d'un tube flexible (22) monté de façon étanche sur les extrémités dudit assemblage allongé (1) et contenant un fluide sous pression, le dispositif antivol comportant des moyens pour recevoir et contrôler la pression du fluide à l'intérieur du tube (22) et détecter que cette pression a atteint une valeur minimale prédéterminée, et des moyens pour déclencher une alarme losque la pression a atteint cette valeur minimale prédéterminée.

11. Dispositif antivol conforme à la revendication 10, caractérisé en ce qu'il comporte un bloc d'alarme (40) séparé de l'organe de fermeture (3, 62), lequel comporte des moyens pour envoyer un signal au bloc d'alarme (40) quand la pression du fluide a atteint ladite valeur minimale prédéterminée.

12. Dispositif antivol conforme à la revendication 11, caractérisé en ce que les moyens pour envoyer un signal sont des moyens autonomes (74), pour émettre un signal électromagnétique, par exemple un signal radio.

13. Dispositif antivol conforme à la revendication 12, caractérisé en ce qu'il comporte un élément formant capot (78) d'accès aux moyens radio autonomes (74), en ce que cet élément (78) est isolé électriquement d'une partie au moins du reste de l'organe de fermeture (62) et est relié électriquement à une antenne intérieure (77) desdits moyens autonomes (74) pour servir d'antenne extérieure.

14. Dispositif antivol conforme à la revendication 13, caractérisé en ce que le capot (78) est isolé électriquement de l'organe de fermeture (62) par une couche de peinture isolante.

## Claims

1. An anti-theft device of the type comprising a relatively flexible and deformable elongate assembly (1) adapted to form a loop and having, at one of its ends, a male closure member (2, 64) and, at its other end, a female closure member (3, 62) adapted to receive and lock the male closure member (2, 64), one of said closure members (3, 62; 2, 64) comprising a closure device which can be opened by means of a key to release the other closure member, the elongate assembly (1) being formed by elongate elements (8, 41) fitted and assembled in one another non-releasably after the style of a chain, at least a part of one being adapted to have a predetermined angular spacing from the corresponding part of the other so as to form a loop, each elongate element (8, 41) having, at one of its ends, a female part (9, 42) and, at its opposite end, a male part (10; 46, 49), characterised in that in the assembled state the male part (10; 46, 49) successively comprises, from its end, peripheral retaining means (14, 15; 54, 55) for non-releasably connecting the elongate element (8, 41) to an adjacent elongate element (8, 41), and means which form a peripheral groove (16; 49, 47, 50) and which are separate from the retaining means (14, 15; 54, 55) and which are limited on the opposite side to the latter by a shoulder (20, 50), in that said male part (10; 46, 49) in the assembled state extends through an opening (12, 44) which on one side limits a female part (9, 42), with which there co-operates the said male part (10; 46, 49), the shoulder (20, 50) of which does not extend through the opening (12, 44) and abuts an edge (21, 51) thereof, and in that the edges of the opening (12, 44) and the means forming the peripheral grooves (16; 49, 47, 50) are so shaped that said male part (10; 46, 49) is adapted to pivot through a predetermined angle relative to the said female part (9, 42) and when the device is closed on itself to form a loop radially opposite parts of the walls (18, 21; 60, 51) of the opening (12, 44) co-operate with the corresponding parts of the walls (19, 20; 47, 50) of the means which form the peripheral groove (16; 49, 47, 50) and bear directly on said walls (19, 20; 47, 50) to withstand forces for separating the elongate elements (8, 41) apart.

2. An anti-theft device according to claim 1, characterised in that the elongate elements (8, 41) have a symmetry of revolution relative to their longitudinal axis.

3. An anti-theft device according to claim 1 or 2, characterised in that each elongate element (8) is a one-piece element, in that the end of the female part (9) is closed by a wall (11) having a substantially circular axial opening (12) intended to receive the male part (10) of an adjacent elongate element (8), and in that behind the said wall (11) there extends a substantially circular cavity (13), the diameter of which is larger than that of the opening (12), into which elastic or elastically mounted catch means (15) of the male part (10) can expand, such means being capable of completely entering a peripheral groove (14) in the outer peripheral wall thereof to pass into the opening (12), and, once expanded, preventing the withdrawal of the said male part (10).

4. An anti-theft device according to claim 3, characterised in that the male part (10) comprises rearwardly of the groove (14) a second peripheral groove (16) intended to receive the inner edge of the opening (12) and in that the inner radial edge (18) of the wall (11) and the radial edge (19) on the male end side of the peripheral groove (16) of the male part (10) are so shaped as to bear on one another when the elongate assembly (1) is closed on itself in the form of a loop.

5. An anti-theft device according to claim 1 or 2, characterised in that each elongate element (41) comprises two separate parts articulated relatively to one another, on the one hand a substantially tubular casing (42) having, at one of its ends, a tapered part (43) having an axial opening (44) of an inside diameter less than the inside diameter of the tubular part (45), and on the other hand a pin forming element (46) comprising a cylindrical body (47) intended to pass into the said axial opening (44), and a head (48) intended to penetrate into the tubular part (45) and be retained by the tapered part (43) of the casing (42).

6. An anti-theft device according to claim 5, characterised in that the elongate element (41) also comprises a bush (49) intended to be engaged on the cylindrical body (47) of the pin (46) and be introduced inside the tubular part (45) of the casing (42) of an adjacent elongate element (41), and assembly means between the bush (49) and the pin (46), on the one hand, and the bush (49) and the casing (42) of the adjacent elongate element (41), on the other hand.

7. An anti-theft device according to claim 6, characterised in that the head (48) of the pin (46) has a spherical outer surface (50) and forms a swivel joint with the inner wall (51) of the tapered part (43) of the casing (42).

8. An anti-theft device according to claim 7, characterised in that the tapered part (43) of the casing (42) of an element (41) has a spherical outer surface (52) and forms a swivel joint with the facing edge (53) of the wall of the casing (42) of the adjacent element (41).

9. An anti-theft device according to claim 8, characterised in that when two adjacent elongate elements (41) are assembled one inside the other, the spherical outer surface (50) of the head (48) of the pin (46) of the first element (41) is substantially in contact with the inner surface (51) of the tapered part (43) of the casing (42) thereof, and the spherical outer surface (52) of the casing (42) of the first element (41) is substantially in contact with the facing edge (53) of the wall of the casing (42) of the second element (41), the two spherical surfaces (50 and 52) being concentric.

10. An anti-theft device according to any one of claims 1 to 9, characterised in that the elongate assembly (1) is housed inside a flexible tube (22) sealingly mounted on the ends of the said elongate assembly (1) and containing a pressure fluid, the anti-theft device comprising means for receiving and monitoring the pressure of the fluid inside the tube (22) and detecting when said pressure reaches a predetermined minimum value, and means for triggering an alarm when the pressure reaches said predetermined minimum value.

11. An anti-theft device according to claim 10, characterised in that it comprises an alarm unit (40) separate from the closure member (3, 62), which comprises means for applying a signal to the alarm unit (40) when the fluid pressure reaches said predetermined minimum value.

12. An anti-theft device according to claim 11, characterised in that the signal applying means are self-contained means (74) for emitting an electromagnetic signal, e.g. a radio signal.

13. An anti-theft device according to claim 12, characterised in that it comprises a cap element (78) for access to the self-contained radio means (74), in that said element (78) is electrically insulated from at least part of the rest of the closure member (62) and is electrically connected to an internal antenna (77) of said self-contained means (74) to serve as an external antenna.

14. An anti-theft device according to claim 13, characterised in that the cap (78) is electrically insulated from the closure member (62) by a coat of insulating paint.

## Patentansprüche

1. Diebstahlsicherungsvorrichtung mit einer relativ nachgiebigen und verformbaren, länglichen Anordnung (1), die zum Bilden einer Schlinge geeignet ist und an einem ihrer Enden ein männliches Verschlußorgan (2, 64) und an seinem anderen Ende ein weibliches Verschlußorgan (3, 62) hat, das dazu ausgelegt ist, das männliche Verschlußorgan (2, 64) aufzunehmen und zu verriegeln, wobei eines der Verschlußorgane (3, 62; 2, 64) eine Verschlußvorrichtung umfaßt, die mittels eines Schlüssels zum Freigeben des anderen Verschlußorgans geöffnet werden kann, wobei die längliche Anordnung (1) aus länglichen Elementen (8, 41) besteht, die ineinander gepaßt und in unlösbarer Art miteinander nach Art einer Kette verbunden sind, wobei ein Teil von zumindest einem Element dazu geeignet ist, um einen vorbestimmten Winkel in bezug auf das entsprechende Teil des anderen Elements zur Bildung einer Schlinge verschwenkt zu werden, wobei jedes längliche Element (8, 41) an einem seiner Enden einen weiblichen Teil (9, 42) und an seinem gegenüberliegenden Ende einen männlichen Teil (10; 46, 49) umfaßt, dadurch gekennzeichnet, daß der männliche Teil (10; 46, 49) im zusammengesetzten Zustand ausgehend von seinem Ende, aufeinanderfolgend eine am Umfang angeordnete Rückhalteeinrichtung (14, 15; 54, 55) zum unlösbaren Verbinden des länglichen Elements (8, 41) mit einem benachbarten länglichen Element (8, 41) und eine eine Umfangsrille bildende Einrichtung (16; 49, 47, 50) umfaßt, die von der Rückhalteeinrichtung (14, 15; 54, 55) getrennt und von der Seite begrenzt ist, die ihr in Gestalt einer Schulter (20, 50) gegenüberliegt, daß der männliche Teil (10; 46, 49) im zusammengesetzten Zustand eine Öffnung (12, 44) durchsetzt, die eine Seite eines weiblichen Teils (9, 42) begrenzt, mit dem der männliche Teil (10; 46, 49) zusammenwirkt, dessen Schulter (20, 50) die Öffnung (12, 44) nicht durchsetzt und gegen deren Rand (21, 51) daran anstößt, und daß die Ränder der Öffnung (12, 44) und die die Umfangsrille bildende Einrichtung (16; 49, 47, 50) derart formmäßig aneinander angepaßt sind, daß der männliche Teil (10; 46, 49) um einen vorbestimmten Winkel in bezug auf den weiblichen Teil (9, 42) zu verschwenken vermag, und daß dann, wenn die Vorrichtung zur Bildung einer Schlinge in sich selbst geschlossen ist, die den Wänden (18, 21; 60, 51) der Öffnung (12, 44) radial gegenüberliegenden Bereiche mit den entsprechenden Bereichen der Wände (19, 20; 47, 50) der die Umfangsrille bildenden Einrichtung (16; 49, 47, 50) zusammenwirken und sich direkt auf diesen Wänden (19, 20; 47, 50) abstützen, um Einwirkungen zur Trennung der länglichen Elemente (8, 41) voneinander zu widerstehen.

2. Diebstahlsicherungsvorrichtung nach Anspruch 1, dadurch gekennzeichnet, daß die länglichen Elemente (8, 41) in bezug auf ihre Längsachse drehsymmetrisch sind.

3. Diebstahlsicherungsvorrichtung nach Anspruch 1 oder 2, dadurch gekennzeichnet, daß jedes längliche Element (8) ein einstückiges Element ist, daß das Ende des weiblichen Teils (9) durch eine Wand (11) verschlossen ist, die eine im wesentlichen kreisförmige axiale Öffnung (12) umfaßt, die dazu bestimmt ist, den männlichen Teil (10) eines benachbarten länglichen Elements (8) aufzunehmen, und daß sich hinter der Wand (11) ein im wesentlichen kreisförmiger Hohlraum (13) erstreckt, dessen Durchmesser größer ist als derjenige der Öffnung (12), in der sich eine elastische Sperreinrichtung oder eine elastisch angebrachte Einrichtung (15) des männlichen Teils (10) entspannen kann, die dazu geeignet ist, vollständig in eine Umfangsrille (14) der Außenumfangswand dieses Teils einzurücken, um in die Öffnung (12) einzutreten, und, sobald sie einmal entspannt ist, das Herausziehen des männlichen Teils (10) zu verhindern.

4. Diebstahlsicherungsvorrichtung nach Anspruch 3, dadurch gekennzeichnet, daß der männliche Teil (10) hinter der Rille (14) eine zweite Umfangsrille (16) umfaßt, die zur Aufnahme des Innenrands der Öffnung (12) bestimmt ist, und daß der radiale Innenrand (18) der Wand (11) und der radiale Rand (19) auf der Seite des männlichen Endes der Umfangsrille (16) des männlichen Teils formmäßig derart aneinander angepaßt sind, daß sie sich aufeinander abstützen, wenn die längliche Anordnung (1) zur Bildung der Schlinge in sich selbst geschlossen ist.

5. Diebstahlsicherungsvorrichtung nach Anspruch 1 oder 2, dadurch gekennzeichnet, daß jedes längliche Element (41) zwei unterschiedliche aneinander angelenkte Teile umfaßt, von denen einer eine im wesentlichen rohrförmige Hülse (42) ist, die an einem ihrer Enden einen verjüngten Bereich (43) umfaßt, der eine axiale Öffnung (44) mit einem Durchmesser hat, der kleiner ist als der Innendurchmesser des rohrförmigen Teils (45), wobei der andere einen Dorn (46) bildet, der einen zylindrischen Körper (47) umfaßt, der dazu bestimmt ist, in die axiale Öffnung (44) einzutreten, und einen Kopf (48), der dazu bestimmt ist, in den rohrförmigen Teil (45) einzudringen und in dem verjüngten Teil (43) der Hülse (42) zurückgehalten zu werden.

6. Diebstahlsicherungsvorrichtung nach Anspruch 5, dadurch gekennzeichnet, daß das längliche Element (41) außerdem eine Buchse (49) umfaßt, die dazu bestimmt ist, auf den zylindrischen Körper (47) des Dorns (46) aufgeschoben zu werden und in das Innere des rohrförmigen Teils (45) der Hülse (42) eines benachbarten, länglichen Elements (41) eingeführt zu werden, sowie eine Einrichtung zum Zusammenschließen der Buchse (49) mit dem Dorn (46) einerseits und der Buchse (49) mit der Hülse (42) des benachbarten länglichen Elements (41) andererseits.

7. Diebstahlsicherungsvorrichtung nach Anspruch 6, dadurch gekennzeichnet, daß der Kopf (48) des Dorns (46) eine kugelförmige Außenfläche (50) hat und mit der Innenwand (51) des verjüngten Bereichs (43) der Hülse (42) ein Kugelgelenk bildet.

8. Diebstahlsicherungsvorrichtung nach Anspruch 7, dadurch gekennzeichnet, daß der verjüngte Bereich (43) der Hülse (42) eines Elements (41) eine Kugelaußenfläche (52) hat und mit der ihm gegenüberliegenden Seite des Rands (53) der Wand der Hülse (42) des benachbarten Elements (41) ein Kugelgelenk bildet.

9. Diebstahlsicherungsvorrichtung nach Anspruch 8, dadurch gekennzeichnet, daß dann, wenn beide benachbarte, längliche Elemente (41) ineinander eingreifend miteinander verbunden sind, die Kugelaußenfläche (50) des Kopfs (48) des Dorns (46) des ersten Elements (41) im wesentlichen in Kontakt mit der Innenfläche (51) des verjüngten Bereichs (43) der Hülse (42) dieses Elements und die Kugelaußenfläche (52) der Hülse (42) des ersten Elements (41) im wesentlichen in Kontakt mit dem Rand (53) der Wand der Hülse (42) des zweiten Elements (41) steht, die ihm gegenüberliegt, wobei die beiden Kugelflächen (50) und (52) konzentrisch sind.

10. Diebstahlsicherungsvorrichtung nach einem der Ansprüche 1 bis 9, dadurch gekennzeichnet, daß die längliche Anordnung (1) im Innern eines flexiblen Rohr (22) angeordnet ist, der auf den Enden der länglichen Anordnung (1) dicht angebracht ist und ein unter Druck stehendes Fluid enthält, wobei die Diebstahlsicherungsvorrichtung eine Einrichtung zum Erfassen und Steuern des Fluiddrucks im Innern des Rohrs (22) und zum Feststellen umfaßt, daß dieser Druck einen vorbestimmten minimalen Wert erreicht hat, und eine Einrichtung zum Auslösen eines Alarms, wenn der Druck diesen vorbestimmten minimalen Wert erreicht hat.

11. Diebstahlsicherungsvorrichtung nach Anspruch 10, dadurch gekennzeichnet, daß sie ein Alarmgerät (40) getrennt vom Verschlußorgan (3, 62) umfaßt, das eine Einrichtung umfaßt, die an das Alarmgerät (40) ein Signal sendet, wenn der Fluiddruck den vorbestimmten minimalen Wert erreicht hat.

12. Diebstahlsicherungsvorrichtung nach Anspruch 11, dadurch gekennzeichnet, daß die Einrichtung zum Senden eines Signals eine selbständige Einrichtung (74) zum Ausstrahlen eines elektromagnetischen Signals, beispielsweise eines Funksignals ist.

13. Diebstahlsicherungsvorrichtung nach Anspruch 12, dadurch gekennzeichnet, daß sie ein eine Haube (78) bildendes Element für einen Zutritt zu der selbständigen Funkeinrichtung (74) umfaßt, und daß dieses Element (78) einerseits zumindest vom Rest des Verschlußorgans (62) elektrisch isoliert und andererseits elektrisch mit einer Innenantenne (77) der selbständigen Einrichtung (74) verbunden ist, die als Außenantenne dient.

14. Diebstahlsicherungsvorrichtung nach Anspruch 13, dadurch gekennzeichnet, daß die Haube (78) vom Verschlußorgan (62) durch eine isolierende Anstrichschicht elektrisch isoliert ist.
